# EUROPÄISCHE PATENTANMELDUNG

(11) **EP 1 363 065 A1**
(43) Veröffentlichungstag der Anmeldung: **19.11.2003**
(21) Anmeldenummer: 02010732.2
(22) Anmeldetag: 14.05.2002
(51) Int. Cl.: F21S 10/00, F21V 14/04, F21S 8/00

(54) **Gebäudeleuchte sowie Verfahren zur Simulation von Lichtverhältnissen von Gebäudeleuchten an Gebäudeflächen**

(71) Anmelder: ERCO Leuchten GmbH, D-58507 Lüdenscheid (DE)
(72) Erfinder: Höbing, Norbert, Dr., 58579 Schalksmühle (DE)
(74) Vertreter: Patentanwälte Ostriga & Sonnet

(57) **Zusammenfassung**

Dargestellt und beschrieben ist zunächst eine Gebäudeleuchte (10) zur Ausleuchtung von Gebäudeflächen (F, 24, 25), umfassend ein Gehäuse (11), wenigstens eine an eine Spannungsversorgung angeschlossene Lichtquelle (15), im Lichtweg der Lichtquelle angeordnete Lichtleitelemente, insbesondere zumindest ein Linsenelement (17), eine Lichtaustrittsöffnung (12) im Gehäuse (11) und gegebenenfalls zusätzliche Funktionselemente wie Lüfter od. dgl. Die Besonderheit dieser Gebäudeleuchte besteht darin, daß innerhalb des Gehäuses (11) als Lichtleitelement (18) eine Vielzahl von Mikrospiegeln (20) und/oder LCD-Elementen angeordnet ist, die zur Erzielung unterschiedlicher Lichtverteilungen (L) unabhängig voneinander einzeln ansteuerbar sind.

Weiterhin ist ein Verfahren zur Simulation von Lichtverhältnissen von Gebäudeleuchten an Gebäudeflächen, insbesondere in einem Gebäuderaum beschrieben.

## Beschreibung

Die Erfindung betrifft zunächst eine Gebäudeleuchte gemäß dem Oberbegriff des Anspruches 1.

Eine derartige Gebäudeleuchte ist bekannt und weit verbreitet und dient der Ausleuchtung, also der Erhellung von Gebäudeflächen, insbesondere in einem Raum eines Gebäudes. Es kann sich bei der Gebäudeleuchte um Innen- oder Außenleuchten handeln.

Insbesondere bei aufwendigen und repräsentativen Bauten wird zunehmend mehr Wert auf eine individuelle Beleuchtung der Gebäuderäume gelegt. Dies bedarf einer individuellen Anpassung der jeweiligen Gebäudeleuchte an das einzelne Gebäude, zum Teil auch an einzelne Räume des Gebäudes, wobei die Entwicklung der Gebäudeleuchte mit der Planung und Konstruktion des Gebäudes oft einhergeht, so daß die Gebäudeleuchte hinsichtlich der von ihr erzeugten Lichtverhältnisse, insbesondere hinsichtlich der von ihr erzeugten Lichtverteilungen, nicht an dem Gebäude ausgetestet werden kann, in dem sie angebracht werden soll, sondern unabhängig von dem realen Gebäude virtuell, d.h. an einem Computer erfolgt.

Der Erfindung liegt die Aufgabe zu Grunde, eine Gebäudeleuchte gemäß dem Oberbegriff des Anspruches 1 derart weiter zu entwickeln, daß diese eine variable Lichtverteilung ermöglicht sowie prinzipiell im Rahmen eines Verfahrens zur Simulation von Lichtverteilungen vorteilhaft eingesetzt werden kann.

Die Erfindung löst diese Aufgabe mit den Merkmalen des Anspruches 1, insbesondere denen des Kennzeichenteils, und ist demgemäß dadurch gekennzeichnet, daß innerhalb des Gehäuses als Lichtleitelement eine Vielzahl von Mikrospiegeln und/oder LCD-Elementen angeordnet ist, die zur Erzielung unterschiedlicher Lichtverteilungen unabhängig voneinander einzeln ansteuerbar sind.

Die Erfindung sieht somit beispielsweise vor, als wesentliches Lichtleitelement innerhalb des Leuchtengehäuses einen als DMD (digital mirror device) bezeichneten Baustein vorzusehen, der durch einzeln ansteuerbare Spiegel, die insbesondere schwenkbar auf einem Substrat angeordnet sind, eine vollständig variable Lichtlenkung des von der Lichtquelle ausgesandten Lichtes ermöglicht. Das von der Lichtquelle ausgesandte Licht trifft auf die einzelnen, in ihrer relativen räumlichen Lage geringfügig veränderbaren Mikrospiegel und wird von diesen durch die Lichtaustrittsöffnung im Gehäuse hindurch auf eine auszuleuchtende Gebäudefläche geworfen.

Die einzelnen Mikrospiegel sind über Ansteuerungssignale in ihrer räumlichen Lage veränderbar, so daß durch eine Übermittlung von Ansteuerungssignalen die Lichtverteilung der Gebäudeleuchte veränderbar ist. Die Lichtverteilung ist dabei auf besonders einfache Weise änderbar.

Die Erfindung sieht aber auch vor, als wesentliches Lichtleitelement eine Vielzahl von LCD-Elementen anzuordnen. Die LCD-Elemente oder LCD-Segmente können zu Zellen zusammengefaßt sein. Hervorzuheben ist hier, wie bei den Mikrospiegeln, die elektronische Ansteuerbarkeit der einzelnen Zellen.

Ein wesentlicher Unterschied zwischen der Verwendung von Mikrospiegeln und LCD-Elementen als Lichtleitelementen bei einer erfindungsgemäßen Gebäudeleuchte besteht darin, daß es sich bei den Mikrospiegeln um eine Auflichtprojektion und bei den LCD-Elementen um eine Durchlichtprojektion handelt. Während die Mikrospiegel in ihrer räumlichen Lage verändert werden, um unterschiedliche Lichtverteilungen zu ermöglichen, bewirkt bei den LCD- (Liquid Crystal Display)-Elementen eine Änderung der Steuerspannung eine Änderung der Licht-Durchlässigkeit.

Als Mikrospiegel im Sinne der Erfindung wird aber auch eine Anordnung vieler kleiner streifenartiger Elemente bezeichnet, die im Rahmen der GLV (grating light valve) -Technologie bekannt sind. Hierbei handelt es sich um einzeln ansteuerbare, zu Pixeln zusammengefaßte mikroskopisch kleine Bandstrukturen, die das Licht entweder reflektieren oder beugen. Die einzelnen streifenartigen Strukturen sind insbesondere auf der Oberfläche eines Silizium-Chip angeordnet und überspannen einen luftgefüllten leeren Raum. Die einzelnen Pixel bzw. die einzelnen Bänder sind elektronisch ansteuerbar. Zusätzliche optische Systeme dienen zur gelenkten Zuführung von Licht auf die bänderartigen Strukturen, sowie gegebenenfalls zur weiteren Lichtleitung des von den Bändern ausgesandten Lichtes.

Weitere Informationen bezüglich der GLV-Technologie können beispielsweise der Internetseite der Silicon Light Machines entnommen werden, die die GLV-Technologie entwickelt hat. Deren Internetadresse lautet www.siliconlight.com.

Der grundsätzliche Unterschied der GLV-Technologie zu der DMD und zu der LCD-Technologie besteht im wesentlichen darin, daß bei der GLV-Technologie ein zeilenweises Erzeugen von Bildpunkten ermöglicht wird.

Die erfindungsgemäße Gebäudeleuchte ermöglicht einen zeit-, kosten- und materialsparenden Einsatz im Rahmen eines Verfahrens zur Simulation von Lichtverhältnissen. Darauf wird später detailliert eingegangen.

Insbesondere ermöglicht die erfindungsgemäße Ausgestaltung der Gebäudeleuchte nunmehr auch eine reflektorlose Gebäudeleuchte, da beispielsweise die Lichtquelle derart gewählt werden kann, daß das von der Lichtquelle ausgesandte Licht direkt, also ohne eine zusätzliche Reflektion an einem Reflektor auf die Mikrospiegel und/oder die LCD-Elemente treffen kann und von dort direkt durch die Gehäuseaustrittsöffnung hindurch an die entsprechenden Gebäudeflächen geworfen werden kann.

Darüber hinaus ermöglicht die erfindungsgemäße Gebäudeleuchte auch die Erzeugung von voneinander im wesentlichen getrennten und voneinander unabhängigen Lichtflecken. Dies war ohne das Vorsehen aufwendig gestalteter Lichtleitelemente bzw. mehrerer Lichtquellen im Stande der Technik ohne weiteres nicht möglich.

Die Verwendung einer Vielzahl von Mikrospiegeln und/oder LCD-Elementen als Lichtleitelemente bietet weiterhin den Vorteil, daß zur Herstellung einer erfindungsgemäßen Gebäudeleuchte auf kommerziell erhältliche Komponenten zurückgegriffen werden kann. Beispielsweise verwenden als sogenannte Beamer bezeichnete Projektoren derartige Bausteine mit einer Vielzahl von Mikrospiegeln und/oder LCD-Elementen. Diese sogenannten Beamer dienen jedoch der Projektion von Lauf- oder Standbildern auf Gebäudeflächen und nicht der Ausleuchtung von Gebäudeflächen.

Die bekannten Projektoren sind als Gebäudeleuchte erfindungsgemäß verwendbar. Insofern können kommerziell erhältliche Komponenten verwendet werden.

Informationen über einen erfindungsgemäß einsetzbaren Baustein mit einer Vielzahl von Mikrospiegeln sind beispielsweise aus einem Aufsatz von Larry J. Hornbeck "Digital Light Processing™ for High-Brightness, High-Resolution Applications" erhältlich, der im Internet unter der Adresse http://www.vxm.com/TIDLP.html, zugänglich ist.

Die erfindungsgemäße Gebäudeleuchte bietet darüber hinaus die Möglichkeit, eine Lichtverteilung mit beliebiger Farbwahl oder Farbzusammensetzung zu erzeugen. Beispielsweise kann die Lichtverteilung mit Licht einer einzigen Farbe erzeugt werden, wobei sich die Farbe, also die Wellenlänge des Lichtes, auch ändern kann. Es ist aber auch möglich, eine Lichtverteilung aus Lichtpunkten, Lichtzonen oder Lichtflecken unterschiedlicher Farben zu einer insgesamt mehrfarbigen Lichtverteilung zusammenzusetzen.

Eine nicht gattungsgemäße Beleuchtungseinrichtung für Fahrzeuge, die bereits DMD-Mikrospiegel verwendet, ist aus der DE 197 37 653 A1 bekannt. Es handelt sich hierbei jedoch nicht um eine Gebäudeleuchte.

Die erfindungsgemäße Gebäudeleuchte kann auch dauerhaft in einem Gebäude zur Ausleuchtung einer Gebäudefläche eingesetzt werden. Dabei bietet die erfindungsgemäße Gebäudeleuchte beispielsweise die Möglichkeit einer Nachjustierung der Lichtverteilung nach Anbringung in dem auszuleuchtenden Gebäude. Auf diese Weise kann die Lichtverteilung der Gebäudeleuchte in montiertem Zustand an das auszuleuchtende Gebäude angepaßt werden. So kann eine nicht zufriedenstellende Lichtverteilung einer montierten Gebäudeleuchte auf diese Weise bei Bedarf verändert werden, ohne daß eine Demontage der Gebäudeleuchte erfolgen muß.

Gemäß einer vorteilhaften Ausgestaltung der Erfindung sind die Mikrospiegel und/oder die LCD-Elemente auf wenigstens einem Baustein angeordnet. Dies bietet den Vorteil, daß die Mikrospiegel bzw. die LCD-Elemente bereits zu Bausteinen zusammengefaßt, kommerziell erhältlich sind. Dies vereinfacht neben der Herstellung der erfindungsgemäßen Gebäudeleuchte beispielsweise auch deren elektronische Ansteuerung, da auf bekannte Schnittstellen und Protokolle für die Ansteuerung zurückgegriffen werden kann. Auch andere, im Zusammenhang mit der Ansteuerelektronik wesentliche Komponenten können somit aus dem Stand der Technik übernommen werden. Schließlich bietet diese Ausgestaltung den Vorteil reduzierter Herstellungskosten der erfindungsgemäßen Gebäudeleuchte.

Gemäß einer weiteren vorteilhaften Ausgestaltung der Erfindung ist innerhalb des Gehäuses ein Speicherelement zur Speicherung von Ansteuerungssignalen für die einzelnen Mikrospiegel bzw. LCD-Elemente angeordnet. Diese Ausgestaltung bietet den Vorteil, daß Ansteuerungsdaten oder Ansteuerungsinformationen nunmehr dezentral in der Gebäudeleuchte selbst abgelegt und auf einfache Weise abgerufen werden können. Beispielsweise können auf diese Weise unterschiedliche Lichtszenen oder Abfolgen von Lichtverteilungen erzeugt werden, wobei über eine mit der Gebäudeleuchte verbundene Steuerleitung nur sehr geringe Informationsmengen zu übertragen sind.

Gemäß einer vorteilhaften Ausgestaltung der Erfindung ist die Gebäudeleuchte mittels einer Signalleitung mit einem externen Signalgeber verbunden.

Diese Ausgestaltung bildet den Vorteil, daß die Ansteuerungssignale für die Mikrospiegel bzw. die LCD-Elemente von einem externen Signalgeber übermittelt werden können, der beispielsweise einen Datenträger, der diese Ansteuerungsinformationen enthält, lesen kann. Auf diese Weise wird es grundsätzlich möglich, die von einem Computer errechneten virtuellen Lichtverteilungsdaten auf einen Datenträger zu speichern, der von dem externen Signalgeber gelesen werden kann.

Gemäß einer weiteren vorteilhaften Ausgestaltung der Erfindung ist die Gebäudeleuchte an einer Gebäudewand, insbesondere an einer Gebäudedecke angeordnet. Dies bietet den Vorteil, daß der Einsatzort der erfindungsgemäßen Gebäudeleuchte zu Simulationszwecken dem tatsächlichen Einsatzort einer an einem realen Gebäude anzubringenden Gebäudeleuchte entspricht. Auf diese Weise kann in einem Verfahren zur Simulation von Lichtverhältnissen nicht nur die Lichtverteilung sondern auch der Einsatzort der Gebäudeleuchte simuliert werden.

Gemäß einer weiteren vorteilhaften Ausgestaltung der Erfindung ist die Gebäudeleuchte mit wenigstens einer weiteren Gebäudeleuchte zu einem System von Gebäudeleuchten verbunden. Dies bietet den Vorteil eine Lichtverteilung simulieren zu können, die ein System von realen Gebäudeleuchten aufweist.

Dabei kann es insbesondere vorteilhaft sein, wenn mehrere Gebäudeleuchten eines Systems von Gebäudeleuchten mit einem gemeinsamen Signalgeber verbunden sind. Als Signalgeber kommt beispielsweise ein Computer in Betracht. Es können aber auch beliebige andere Vorrichtungen verwendet werden, die Informationen, und zwar elektrische Ansteuerungssignale für die Mikrospiegel oder für die LCD-Elemente, über eine Signalleitung an die Gebäudeleuchten übertragen können.

Gemäß einer weiteren vorteilhaften Ausgestaltung der Erfindung ist innerhalb des Gehäuses im Lichtweg der Lichtquelle ein Farbgebungselement, insbesondere ein rotierendes Farbrad angeordnet. Insbesondere bei Verwendung einer herkömmlichen Lichtquelle, also beispielsweise einer weißes Licht aussendenden Lichtquelle, besteht auf diese Weise mit einfachen Mitteln die Möglichkeit, dem von der Lichtquelle ausgesandten weißen Licht eine bestimmte Farbe zuzuordnen. Das als weißes Licht bezeichenbare, von der Lichtquelle ausgesandte Licht durchtritt dabei beispielsweise unterschiedlich farbig ausgebildete Segmente einer rotierenden Farbscheibe, eines sogenannten Farbrades, welches mit einer hohen Frequenz von z. B. 100 Hz rotiert. Je nach momentaner Position des Farbrades gelangen auf die einzelnen Mikrospiegel Lichtstrahlen unterschiedlicher Farbe. Die einzelnen Mikrospiegel können sehr schnell angesteuert werden, so dass ein einzelner Mikrospiegel jeweils eine bestimmte Position einnimmt, wenn ein Lichtstrahl einer bestimmten Farbe, z. B. mit einem roten Farbanteil, auf ihn trifft. Für den Fall, dass das Farbrad entsprechend weitergedreht ist, und nachfolgend ein beispielsweise grüner Lichtstrahl auf denselben Mikrospiegel trifft, hat dieser seine Ausrichtung geändert und lenkt den grünen Lichtstrahl zu einem anderen Ort.

Da die Rotationsfrequenz des Farbrades und die Ansteuerungsfrequenz der einzelnen Mikrospiegel höher ist, als die Auflösungsgeschwindigkeit für die Wahrnehmung des menschlichen Auges, erscheint die bereitgestellte Lichtverteilung hinsichtlich ihrer farblichen Zusammensetzung kontinuierlich.

Als weißes Licht wird in diesem Zusammenhang das von einer herkömmlichen Lichtquelle ausgesandte Licht bezeichnet, welches selbstverständlich Lichtanteile unterschiedlicher Frequenzen aufweist. Als Farbgebungselement wird erfindungsgemäß nunmehr ein Bauelement bezeichnet, welches diesem weißen Licht mit einfachen Mitteln Licht unterschiedlicher Farbanteile zuordnen kann, bzw. die entsprechenden Farbanteile aus dem weißen Licht herausfiltern kann.

Weiterhin betrifft die Erfindung ein Verfahren zur Simulation von Lichtverhältnissen von Gebäudeleuchten an Gebäudeflächen, insbesondere in einem Gebäuderaum, gemäß dem Oberbegriff des Anspruches 10.

Es ist ein druckschriftlich nicht belegbares Verfahren zur Simulation von Lichtverhältnissen von Gebäudeleuchten an Gebäudeflächen bekannt, bei dem eine Leuchtenoptik dadurch bereitgestellt wird, daß eine neue Gebäudeleuchte mit Hilfe herkömmlicher CAD-Systeme entwickelt und konstruiert wird. Diese neue, zu entwickelnde Gebäudeleuchte ist dabei eine herkömmliche Gebäudeleuchte, die mit einer herkömmlichen Lichtquelle, herkömmlichen Lichtleitelementen, wie Reflektoren etc. arbeitet. Nach Entwicklung einer derartigen herkömmlichen Gebäudeleuchte wird diese in der Regel in Serie produziert und am Einsatzort fest eingebaut.

Die Leuchtenoptik der herkömmlichen Gebäudeleuchte umfaßt dabei insbesondere die räumliche Anordnung der einzelnen, in einem Leuchtengehäuse angeordneten Elemente zueinander, um einen Lichtverteilungsdatensatz berechnen zu können. Der Begriff Leuchtenoptik soll dabei ganz allgemein sämtliche Bestandteile der herkömmlichen Gebäudeleuchte mit berücksichtigen, die zu der Lichtverteilung der Gebäudeleuchte am Einsatzort, also im Betrieb beitragen können.

Mit Hilfe geeigneter Software kann auf Grund der Anordnung von Lichtquelle und Lichtleitelementen zueinander, sowie unter Berücksichtigung der Geometrie der Elemente, beispielsweise unterschiedlicher Krümmungsformen von Reflektoren, der Lichtlenkung bzw. Beeinflussung des Lichtes durch Linsen, Spiegel etc., berechnet werden, wie eine von einer derartigen herkömmlichen Gebäudeleuchte erzeugte Lichtverteilung in einem Raum bestimmter Dimensionen tatsächlich aussieht. Der Lichtverteilungsdatensatz wird dabei weitgehend automatisch erstellt.

Um bereits vor Erstellung eines Gebäudes, in dem die herkömmliche, zu entwickelnde Gebäudeleuchte später installiert werden soll, die Lichtverteilung der neu entwickelten Gebäudeleuchte in dem Raum zu simulieren, kann an einem Computer mit Hilfe des berechneten Lichtverteilungsdatensatzes in einem virtuellen, an dem Bildschirm eines Computer darstellbaren Raum, die Lichtverteilung der neuentwickelten Gebäudeleuchte gezeigt werden. Auf diese Weise kann sich beispielsweise ein Architekt schon vor der Erstellung des Gebäudes eine räumliche Vorstellung von der Lichtverteilung der Leuchte und insbesondere der Wirkung der Lichtverteilung machen.

Der Erfindung liegt die Aufgabe zu Grunde, das bekannte Verfahren zur Simulation von Lichtverhältnissen gemäß dem Oberbegriff des Anspruches 10 zu verbessern.

Die Erfindung löst diese Aufgabe mit den Merkmalen des Anspruches 10, insbesondere mit denen des Kennzeichenteils und ist demgemäß gekennzeichnet durch die Schritte
c) Anordnen einer Gebäudeleuchte mit einer Vielzahl von Mikrospiegeln und/oder LCD-Elementen, insbesondere Anordnen einer Gebäudeleuchte nach einem der Ansprüche 1 bis 9, an einer realen Gebäudefläche, insbesondere in einem realen Raum, und
d) Ansteuern der Mikrospiegel und/oder der LCD-Elemente der Gebäudeleuchte unter Verwendung des Lichtverteilungsdatensatzes zur Erzeugung einer realen Lichtverteilung.

Das Prinzip der Erfindung liegt somit im wesentlichen darin, eine Gebäudeleuchte, die eine Vielzahl von Mikrospiegeln und/oder LCD-Elementen enthält, an einer realen Gebäudefläche anzuordnen und durch eine elektronische Ansteuerung der Mikrospiegel und/oder LCD-Elemente eine Lichtverteilung zu simulieren.

Auf diese Weise ist es nunmehr mit einfachen Mitteln möglich, in einem realen Raum eine Gebäudeleuchte mit Mikrospiegeln und/oder LCD-Elementen anzuordnen, oder gegebenenfalls auch - probeweise - zu montieren. Nunmehr kann auf den bereits vorhandenen bestehenden Lichtverteilungsdatensatz zurückgegriffen werden, der gegebenenfalls nach einem vorgegebenen Algorithmus noch in Ansteuerungssignale für die einzelnen Mikrospiegel bzw. LCD-Elemente umgewandelt werden kann. Die bisher ausschließlich am Computer virtuell darstellbare Lichtverteilung kann nun somit auf einfache Weise in einen realen Raum eingebracht werden, so daß sich beispielsweise ein Architekt einen Eindruck von der tatsächlichen Lichtwirkung der Lichtverteilung der Gebäudeleuchte in einem realen Raum verschaffen kann.

Der reale Raum, in dem die Gebäudeleuchte angeordnet wird, ein Testraum, kann dabei ein beliebiger Raum sein, der vorzugsweise dem Raum nachempfunden ist, in dem eine herkömmliche Gebäudeleuchte später tatsächlich eingebaut werden soll.

Insbesondere auf Grund der Tatsache, daß auf den bereits bestehenden Lichtverteilungsdatensatz, der ohnehin im Rahmen der Entwicklung einer Leuchte erstellt wird, zurückgegriffen werden kann, ohne daß besondere, für den Einzelfall vorzusehende Maßnahmen notwendig werden, vereinfacht sich die Entwicklung von Leuchten deutlich.

Gemäß einer vorteilhaften Ausgestaltung des Verfahrens ist folgender Schritt vorgesehen:
e) Transformation des Lichtverteilungsdatensatzes in Ansteuerungssignale für die einzelnen Mikrospiegel bzw. LCD-Elemente der Leuchte.

Diese Ausgestaltung ermöglicht eine mühelose, weil insbesondere automatisierbare Berechnung der elektronischen Ansteuerungssignale für die Mikrospiegel bzw. LCD-Elemente auf Basis des bereits vorhandenen Lichtverteilungsdatensatzes. Die Transformation kann dabei durch eine spezielle Software auf einfache Weise erfolgen.

Insbesondere bei einem Verfahren zur Entwicklung von einer Leuchte, das zusätzlich zu dem Verfahren zur Simulation von Lichtverhältnissen noch den Schritt des Entwerfens einer Leuchte aufweist, bietet die erfindungsgemäße Ausgestaltung des Verfahrens zur Simulation von Lichtverhältnissen von Leuchten an einer Gebäudefläche, insbesondere in einem Gebäuderaum erhebliche Vorteile. Beispielsweise kann im Rahmen einer Simulation einer Lichtverteilung einer neuentwickelten Gebäudeleuchte festgestellt werden, daß die tatsächlich erreichte Lichtverteilung nicht den Wünschen entspricht. Insofern kann frühzeitig im Rahmen einer Leuchtenentwicklung Einfluß genommen werden und in die Entwicklung der Leuchte korrigierend eingegriffen werden, derart, daß die erwünschte Lichtverteilung auch tatsächlich erreicht wird.

Weitere Vorteile ergeben sich aus den nicht zitierten Unteransprüchen sowie an Hand der nun folgenden Beschreibung eines in den Figuren dargestellten Ausführungsbeispiels. Darin zeigen:
Fig. 1 schematisch eine erfindungsgemäße Gebäudeleuchte,
Fig. 1a schematisch in Ansicht ein Farbrad gemäß Fig. 1,
Fig. 2 eine Gebäudeleuchte gemäß Fig. 1, die bodenseitig in einem realen Raum angeordnet ist,
Fig. 3 schematisch eine Gebäudeleuchte gemäß Fig. 1, die deckenseitig in einem realen Raum angeordnet ist und zur Wandflutung eingesetzt wird,
Fig. 4 ein System von drei deckenseitig befestigten Gebäudeleuchten,
Fig. 5 drei unterschiedlichen Sonnenständen entsprechende Streifenmuster als Lichtverteilungskurven,
Fig. 6 zwei Lichtverteilungen entsprechend einem unverzerrten und einem verzerrten Fensterkreuz,
Fig. 7 zwei Lichtverteilungen, die Ansammlungen von Laubblättern bei unterschiedlichen Sonnenständen darstellen,
Fig. 8 eine Lichtverteilung, die drei quadratische, unverzerrte Konturen abbildet,
Fig. 9 eine Lichtverteilung, die die Quadrate gemäß Fig. 8 verzerrt darstellt,
Fig. 10 eine Lichtverteilung dreier unverzerrter kreisförmiger Abbildungen, und
Fig. 11 eine Lichtverteilung gemäß Fig. 10 in verzerrtem Zustand.

Die erfindungsgemäße Gebäudeleuchte wird in ihrer Gesamtheit in den Figuren mit 10 bezeichnet. Sie umfaßt ein Gehäuse 11, welches eine Lichtaustrittsöffnung 12 aufweist. Über elektrische Leitungen 13 ist eine Spannungsversorgung mit einer nicht dargestellten Spannungsquelle gewährleistet. Über eine elektrische Leitung 14 werden Daten von einem zentralen Signalgeber zu der Gebäudeleuchte 10 übertragen.

Innerhalb des Gehäuses 11 ist eine Lichtquelle 15 angeordnet. Dies kann beispielsweise eine Hochdruckhalogen-Metalldampflampe mit einem kleinen Brenner sein. Beispielsweise kommt eine Lampe von etwa 150 W Leistung in Betracht, die unter der Bezeichnung CDM-SA/T bzw. CDM-SA/R von der Philipps Lighting BV, Eindhoven, NL im Handel erhältlich ist.

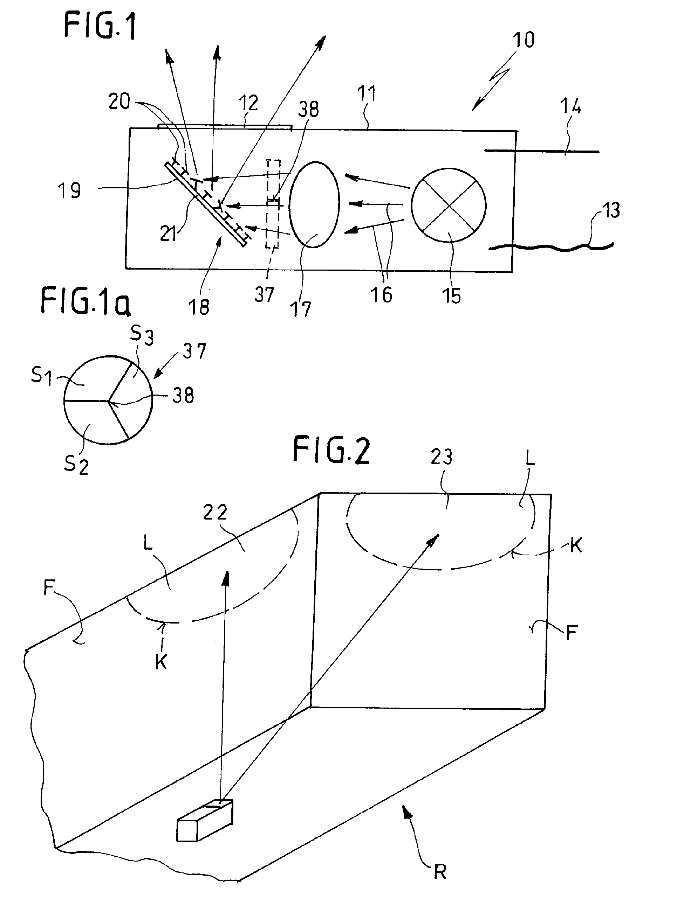

Von der Lichtquelle wird das Licht, welches durch Pfeile 16 angedeutet ist, zu einem Linsenelement 17 geleitet. Von dort läuft das Licht zu einer Lichtleitanordnung 18. Beim Ausführungsbeispiel gemäß Fig. 1 handelt es sich bei der Lichtleitanordnung 18 um einen Baustein 19, auf dem eine Vielzahl von Mikrospiegeln 20 angeordnet ist. Diese sind wie Fig. 1 schematisch andeutet, in ihrer räumlichen Lage relativ zu einem flächigen Substrat 21 verstellbar, insbesondere verschwenkbar.

Das Licht tritt durch die Lichtaustrittsöffnung 12 aus dem Gehäuse 11 heraus, wobei auf Grund der unterschiedlichen räumlichen Lage der einzelnen Mikrospiegel 20 die Lichtstrahlen unterschiedlich abgelenkt werden. Dies soll schematisch durch die divergierenden Lichtpfeile, die auf der Lichtaustrittsöffnung 12 der Fig. 1 heraustreten, dargestellt werden.

Fig. 1 zeigt keine besonderen Reflektorelemente etc. Selbstverständlich können diese jedoch vorgesehen sein, um das gesamte von der Lichtquelle 15 ausgesandte Licht auf die Lichtleitanordnung 18 hin zu richten.

Die Datenleitung 14 ist, wie aus Fig. 1 nicht ersichtlich ist, zur Ansteuerung der Mikrospiegel 20 mit dem Baustein 19 verbunden. Durch elektronische Ansteuerung können die einzelnen Mikrospiegel 20 unabhängig voneinander in ihrer räumlichen Lage verstellt werden, so daß sich insgesamt eine Lichtverteilungskurve L an einer Gebäudefläche F ergibt.

An Stelle der in Fig. 1 dargestellten Mikrospiegel 20 können selbstverständlich auch LCD-Elemente verwendet werden, die ebenfalls einzeln elektronisch ansteuerbar sind. Durch die Ansteuerung wird ihre Lichtdurchlässigkeit verändert, so daß eine beliebige Lichtverteilung L an einer Gebäudefläche F erreichbar ist.

In Fig. 1 ist in gestrichelter Linienführung ein Farbrad 37 angedeutet. Das Farbrad 37 ist um eine Drehachse 38 drehbar und rotiert mit konstanter Frequenz. Insbesondere dann, wenn Mikrospiegel 20 verwendet werden, ist das Farbrad 37 als Farbgebungselement zwischen der Lichtquelle 15 und den Mikrospiegeln 20, also im Lichtwege angeordnet. Gemäß Fig. 1 ist das Farbrad 37 zwischen dem Linsenelement 17 und dem Baustein 19 angeordnet.

Fig. 1a lässt schematisch erkennen, dass das im wesentlichen kreisförmige Farbrad 37 in drei Kreissegmente S1, S2 und S3 unterteilt ist. Jedes Kreissegment entspricht etwa einem 120°-Segment und besteht beispielsweise aus transparenter, farbiger Folie. Zweckmäßig ist die Zuordnung der Farben Rot, Grün und Blau zu den Segmenten S1, S2 und S3, so dass jede beliebige Farbe erzeugt werden kann.

Das Farbrad 37 rotiert mit hoher, konstanter Drehfrequenz, wobei die einzelnen Mikrospiegel 20 derart angesteuert werden können, dass im richtigen Moment ein bestimmter Lichtstrahl eines bestimmten Farbanteils in die gewünschte Richtung gelenkt wird, um zur Lichtverteilungskurve beizutragen.

Neben der in Fig. 1 schematisch dargestellten Anordnung des Farbrades 37 zwischen Linsenelement 17 und dem Baustein 20 ist es auch vorstellbar, dass das Farbrad 37 zwischen der Lichtquelle 15 und dem Linsenelement 17 angeordnet ist. In jedem Fall ist vorgesehen, das Farbrad 37 innerhalb des Gehäuses 11 der Gebäudeleuchte anzuordnen.

Ein Farbrad 37 als rotierendes Farbgebungselement in Kombination mit einer herkömmlichen Lichtquelle 15 ist besonders vorteilhaft, da eine einfache Bauweise möglich wird. Anstelle der Verwendung eines rotierenden Farbrades 37 als Farbgebungselement kann selbstverständlich auch vorgesehen sein, ein anderes Farbgebungselement, beispielsweise nach Art eines eine Hin- und Her-Bewegung durchführenden streifenförmigen Elementes, anzuordnen.

Fig. 2 zeigt eine bodenseitige Anordnung einer Gebäudeleuchte 10 in einem realen Raum R. Von der Gebäudeleuchte 10 wird durch entsprechende Ansteuerung der Mikrospiegel bzw. LCD-Elemente eine Lichtverteilungskurve L an einer Gebäudefläche F, beispielsweise einer Wand des Raumes R erzeugt. Beim Ausführungsbeispiel gemäß Fig. 2 sind zwei voneinander getrennte Lichtverteilungskurven L nach Art von im wesentlichen ellipsenförmigen Flächen dargestellt. Hieraus wird bereits deutlich, daß mit einer erfindungsgemäßen Gebäudeleuchte 10 mehrere voneinander unabhängige Lichtflecken mit einer einzigen Gebäudeleuchte 10, die lediglich eine einzige Lichtquelle 15 enthält, erzeugt werden können.

Beim Ausführungsbeispiel gemäß Fig. 2 weisen die beiden Lichtflecken 22, 23 eine verhältnismäßig scharfe Kontur K auf. Selbstverständlich ist es durch Ansteuerung der Mikrospiegel bzw. LCD-Elemente doch gleicherweise auch möglich, weiche Konturen auszubilden.

Die dargestellte bodenseitige Anordnung der Gebäudeleuchte 10 soll lediglich beispielhaft verstanden werden. Vorteilhafterweise ist die Gebäudeleuchte 10 deckenseitig angebracht, so daß auch der Einsatzort einer realen Gebäudeleuchte in einem realen Raum simuliert werden kann.

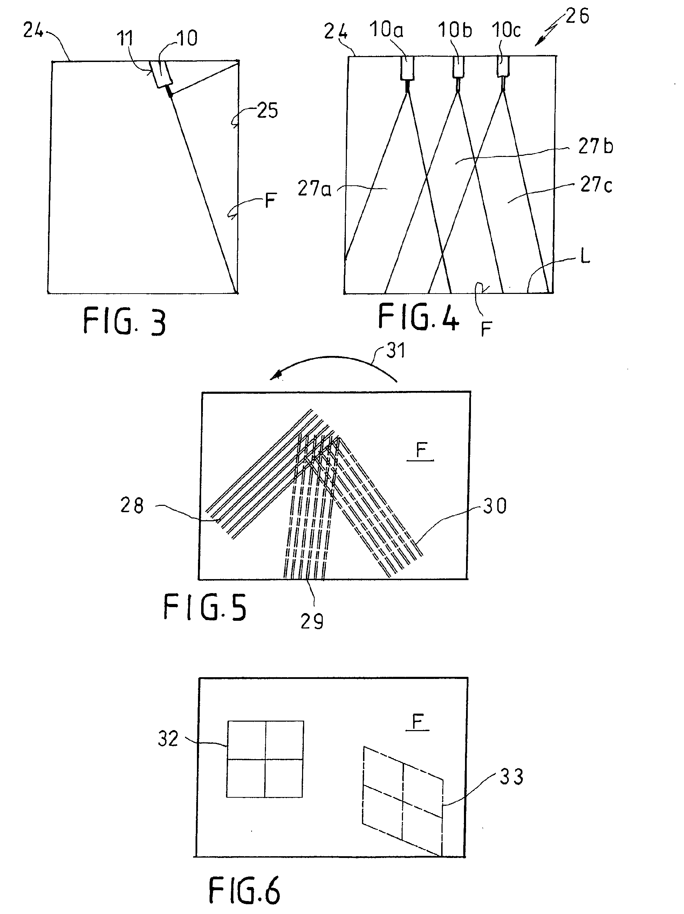

Fig. 3 zeigt eine derartige deckenseitige Anbringung einer Gebäudeleuchte 10 an einer Decke 24. Das Gehäuse 11 der Gebäudeleuchte 10 ist hier leicht geneigt zur Decke 24 dargestellt, was prinzipiell auf Grund der Auslenkbarkeit der Mikrospiegel nicht notwendig ist.

Beim Ausführungsbeispiel gemäß Fig. 3 dient die Gebäudeleuchte 10 als Wandfluter, der die Wand 25 ausleuchtet. Selbstverständlich sind auch Boden- oder Deckenfluter mit der erfindungsgemäßen Gebäudeleuchte 10 realisierbar. Auch für Außenbeleuchtungen ist die Gebäudeleuchte 10 einsetzbar.

Fig. 4 zeigt ein System 26 von drei Gebäudeleuchten 10a, 10b, 10c die sämtlich, beispielsweise entlang einer Geraden an der Decke 24 eines Gebäudes angeordnet sind. Jede Gebäudeleuchte 10a, 10b, 10c kann eine eigene Lichtverteilungskurve L darstellen, was durch die drei Lichtkegel 27a, 27b, 27c angedeutet werden soll.

Die drei Gebäudeleuchten 10a, 10b, 10c sind mit einem gemeinsamen, nicht dargestellten Signalgeber verbunden. Bei dem Signalgeber kann es sich beispielsweise um einen Computer handeln, der den Ansteuerungsdatensatz enthält und diesen über eine gemeinsame oder mehrere separate Datenleitungen an die einzelnen Gebäudeleuchten 10a, 10b, 10c übertragen kann. Auf diese Weise können mehrere Gebäudeleuchten 10a, 10b, 10c durch zentrale Ansteuerung gemeinsam eine Lichtverteilungskurve L erzeugen.

Die Fig. 5 bis 11 zeigen typische Beispiele von Lichtverteilungen, wie sie von einer erfindungsgemäßen Gebäudeleuchte 10 an einer Gebäudefläche, also z.B. an einer Boden- oder Wandfläche, erzeugt werden können.

Fig. 5 zeigt schematisch drei verschiedene Muster 28, 29, 30 von Streifen, die bei unterschiedlichen Sonnenständen erreicht werden können. Es kann sich beispielsweise um ein Streifenmuster 28 handeln, welches durch Fensterlamellen oder anderen gebäudefesten Einrichtungen bei Sonneneinfall durch ein Fenster in einen Gebäuderaum hinein erzeugt wird. Während die Sonne etwa entlang dem Pfeil 31 (schematisch angedeutet) wandert, ändern sich die in den Gebäuderaum einfallenden Schattenmuster, so daß die Streifenmuster 29 und 30 aufeinanderfolgend entstehen.

Mit einer erfindungsgemäßen Gebäudeleuchte 10 kann auf diese Weise eine Simulation von unterschiedlichen Sonnenständen zu verschiedenen Tageszeiten simuliert werden. Das Tageslicht kann nachgeführt werden.

Gleichermaßen zeigt Fig. 6 die Lichtverteilung eines Fensterkreuzes 32, bzw. dessen Schattenwurf an eine Gebäudefläche F. Das Fensterkreuz 33 ist verzerrt dargestellt, entsprechend einer Lichtverteilungskurve, die einem veränderten Sonnenstand entspricht. Auch hier kann mit einer erfindungsgemäßen Gebäudeleuchte 10 eine Tageslichtnachführung einer Lichtverteilungskurve als Fensterkreuz auf besonders einfache Weise erreicht werden.

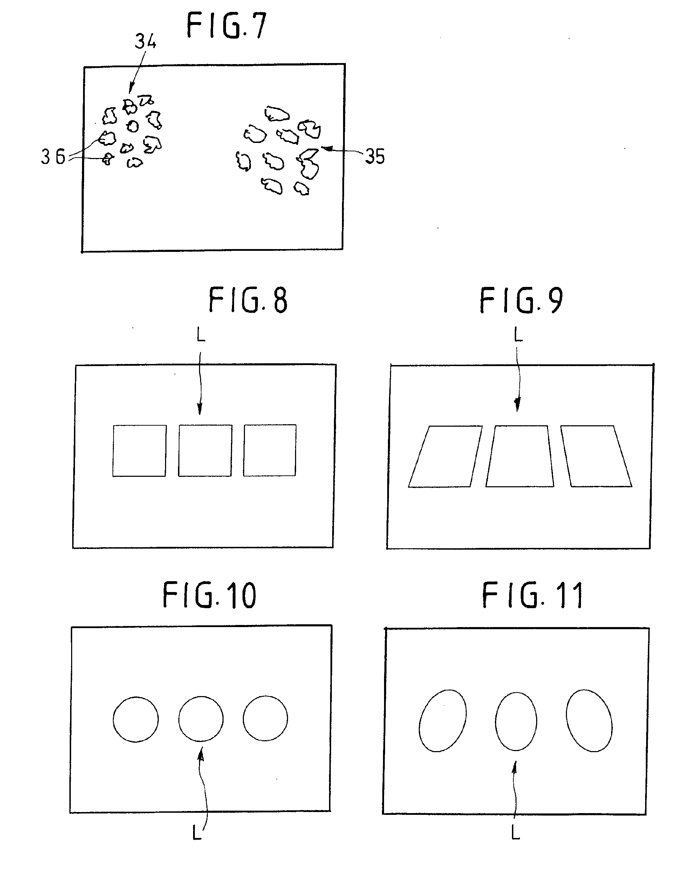

Fig. 7 zeigt zwei Ansammlungen 34, 35 von Laubblättern 36. Hier wird bereits deutlich, daß mit einer einzigen erfindungsgemäßen Gebäudeleuchte 10 einzelne, voneinander durch scharfe Konturen getrennte Blätter 36 dargestellt werden können, so daß ein realistisches Bild einer Lichtverteilungskurve von auf einem Glasdach befindlichen Laub erzeugt werden kann, welches von Sonnenlicht durchscheint wird. Auf diese Weise lassen sich beispielsweise Biergartenatmosphären künstlich erzeugen.

Fig. 7 zeigt dabei zwei unterschiedliche Lichtverteilungskurven 34, 35, die unterschiedlichen Sonnenständen entsprechen.

Die Fig. 8 bis 11 zeigen unterschiedliche, aus jeweils drei Lichtflecken bestehende Lichtverteilungen. Die Fig. 8 und 10 zeigen dabei unverzerrte einfache geometrische Figuren, nämlich Quadrate bzw. Kreise. Die Fig. 9 und 11 zeigen perspektivisch verzerrte Lichtverteilungen. Die verzerrten Lichtverteilungskurven treten beispielsweise auf, wenn einfache geometrische Figuren, etwa gemäß Fig. 8 und Fig. 10 in der Abbildungsebene einer deckenseitig befestigten Gebäudeleuchte wandseitig abgebildet werden.

Derartige Verzerrungseffekte können gewünscht sein. Es kann aber auch die Situation auftreten, daß gerade derartige Verzerrungseffekte vermieden werden sollen.

Die erfindungsgemäße Gebäudeleuchte 10 ermöglicht ein Abbilden derartiger Lichtverteilungen, wobei Verzerrungen, wie sie übertrieben deutlich in den Figuren 9 und 11 dargestellt sind, teilweise erst bei der Simulation von Lichtverhältnissen in einem realen Raum wahrgenommen werden. Für den Fall, daß diese Verzerrungseffekte vermieden werden sollen, besteht somit während der Entwicklung einer Leuchte noch die Möglichkeit der Einflußnahme auf den Entwicklungsprozeß der Gebäudeleuchte, so daß die ungewünschten Verzerrungseffekte eliminiert werden können.

Auf diese Weise kann man von der Simulation von Lichtverhältnissen für die Entwicklung einer Gebäudeleuchte lernen.

Sämtliche Verzerrungen oder Verzerrungseffekte können mit der erfindungsgemäßen Gebäudeleuchte 10 dargestellt werden. Dies bietet insbesondere den Vorteil dahingehend, daß die Gebäudeleuchte an einem beliebigen Einsatzort angeordnet sein kann, wodurch jeweils unterschiedliche Verzerrungseffekte untersucht werden können. Die Änderung eines Einsatzortes für die Gebäudeleuchte 10 kann dabei per Software durch eine geänderte Berechnung eines Lichtverteilungsdatensatzes auf einfache Weise berücksichtigt werden.

Als Lichtverteilungen oder Lichtverteilungskurven L kommen dabei grundsätzlich auch sogenannte Gobos in Betracht, die ebenfalls an Gebäudeflächen F geworfen werden. Auch hier ermöglicht die erfindungsgemäße Gebäudeleuchte 10 eine einfache Simulation von Lichtverhältnissen eines derartigen Gobos an einer Gebäudefläche.

## Patentansprüche

1. Gebäudeleuchte (10) zur Ausleuchtung von Gebäudeflächen (F, 24, 25), umfassend ein Gehäuse (11), wenigstens eine an eine Spannungsversorgung angeschlossene Lichtquelle (15), im Lichtweg der Lichtquelle angeordnete Lichtleitelemente, insbesondere zumindest ein Linsenelement (17), eine Lichtaustrittsöffnung (12) im Gehäuse (11) und gegebenenfalls zusätzliche Funktionselemente wie Lüfter od. dgl., **dadurch gekennzeichnet, daß** innerhalb des Gehäuses (11) als Lichtleitelement (18) eine Vielzahl von Mikrospiegeln (20) und/oder LCD-Elementen angeordnet ist, die zur Erzielung unterschiedlicher Lichtverteilungen (L) unabhängig voneinander einzeln ansteuerbar sind.

2. Gebäudeleuchte nach Anspruch 1, **dadurch gekennzeichnet, daß** die Mikrospiegel (20) und/oder die LCD-Elemente auf wenigstens einem Baustein (19) angeordnet sind.

3. Gebäudeleuchte nach Anspruch 1 oder 2, **dadurch gekennzeichnet, daß** innerhalb des Gehäuses (11) ein Speicherelement zur Speicherung von Ansteuerungssignalen für die einzelnen Mikrospiegel (20) bzw. LCD-Elemente angeordnet ist.

4. Gebäudeleuchte nach einem der Ansprüche 1 bis 3, **dadurch gekennzeichnet, daß** der Baustein (19) mit der Spannungsversorgung der Lichtquelle (15) verbunden ist.

5. Gebäudeleuchte nach einem der Ansprüche 1 bis 4, **dadurch gekennzeichnet, daß** die Gebäudeleuchte (10) mittels einer Signalleitung (14) mit einem externen Signalgeber verbunden ist.

6. Gebäudeleuchte nach einem der vorangegangenen Ansprüche, **dadurch gekennzeichnet, daß** sie an einer Gebäudewand, insbesondere an einer Gebäudedecke (24) angeordnet ist.

7. Gebäudeleuchte nach Anspruch 6, **dadurch gekennzeichnet, daß** sie fest an der Gebäudewand (24, 25) angeordnet ist.

8. Gebäudeleuchte (10a) nach einem der Ansprüche 1 bis 7, **dadurch gekennzeichnet, daß** sie mit wenigstens einer weiteren Gebäudeleuchte (10b, 10c) zu einem System (26) von Gebäudeleuchten (10a, 10b, 10c) verbunden ist.

9. Gebäudeleuchte (10a) nach Anspruch 8, **dadurch gekennzeichnet, daß** sie mit wenigstens einer weiteren Gebäudeleuchte (10b, 10c) eine gemeinsame Lichtverteilungskurve (L) erzeugt.

10. Gebäudeleuchte nach einem der vorangegangenen Ansprüche, **dadurch gekennzeichnet, dass** innerhalb des Gehäuses ein Farbgebungselement, insbesondere ein rotierendes Farbrad (37), angeordnet ist.

11. Gebäudeleuchte nach Anspruch 10, **dadurch gekennzeichnet, dass** das Farbgebungselement im Lichtweg der Lichtquelle zwischen der Lichtquelle und den Mikrospiegeln und/oder den LCD-Elementen angeordnet ist.

12. Gebäudeleuchte nach Anspruch 11, **dadurch gekennzeichnet, dass** das Farbgebungselement zwischen einem Lichtleitelement und den Mikrospiegeln und/oder den LCD-Elementen angeordnet ist.

13. Verfahren zur Simulation von Lichtverhältnissen von Gebäudeleuchten (10) an Gebäudeflächen (F), insbesondere in einem Gebäuderaum (R), umfassend die Schritte
a) Bereitstellen einer Leuchtenoptik einer Gebäudeleuchte (10), wobei die Leuchtenoptik insbesondere die räumliche Anordnung von Lichtquelle (15) und Lichtleitelementen (17) zueinander umfaßt,
b) Erstellen eines Lichtverteilungsdatensatzes anhand der bereitgestellten Leuchtenoptik, der die räumliche Lichtverteilung der an einer Gebäudefläche (F), insbesondere in einem Raum (R) angeordneten Gebäudeleuchte (10) darstellt,
**gekennzeichnet durch** die Schritte
c) Anordnen einer Gebäudeleuchte (10) mit einer Vielzahl von Mikrospiegeln und/oder LCD-Elementen, insbesondere Anordnen einer Gebäudeleuchte (10) nach einem der Ansprüche 1 bis 12, an einer realen Gebäudefläche (F), insbesondere in einem realen Raum (R), und
d) Ansteuern der Mikrospiegel (20) und/oder der LCD-Elemente der Gebäudeleuchte (10) unter Verwendung des Lichtverteilungsdatensatzes zur Erzeugung einer realen Lichtverteilung.

14. Verfahren nach Anspruch 13, umfassend den Schritt
e) Transformation des Lichtverteilungsdatensatzes in Ansteuerungssignale für die einzelnen Mikrospiegel (20) bzw. LCD-Elemente der Gebäudeleuchte (10).
